# FASCICULE DE BREVET EUROPEEN

(11) **EP 2 789 154 B1**
(45) Date de publication et mention de la délivrance du brevet: **28.07.2021**
(21) Numéro de dépôt: 12806597.6
(22) Date de dépôt: 29.11.2012
(51) Int. Cl.: H04W 4/90, H04M 1/72418, H04M 1/72424

(54) **TELEPHONE CELLULAIRE ET PROGRAMME INFORMATIQUE COMPRENANT DES MOYENS POUR LA GENERATION ET L'EMISSION D'UN MESSAGE D'ALERTE**
MOBILTELEFON UND COMPUTERPROGRAMM MIT MITTELN ZUM ERZEUGEN UND SENDEN EINER WARNMELDUNG
CELLULAR TELEPHONE AND COMPUTER PROGRAM COMPRISING MEANS FOR GENERATING AND SENDING AN ALERT

(30) Priorité: 05.12.2011 FR 1103711
(43) Date de publication de la demande: 15.10.2014
(73) Titulaire: Waterhouse, Valérie, 74940 Annecy-le-Vieux (FR)
(72) Inventeur: Waterhouse, Valérie, 74940 Annecy-le-Vieux (FR)
(86) Numéro de dépôt international: PCT/FR2012/052753
(87) Numéro de publication internationale: WO 2013/083901

(56) Documents cités:
- EP-A1- 2 219 163
- DE-A1-102007 024 177
- US-A1- 2005 221 866
- US-A1- 2006 217 105
- US-A1- 2009 093 229

## Description

### Domaine de l'invention

La présente invention concerne le domaine de la sécurité des personnes par l'adaptation d'une fonction « de panique » sur un téléphone cellulaire.

### Etat de la technique

On connaît dans l'état de la technique différentes solutions proposant de fournir à l'usager d'un téléphone cellulaire un moyen pour déclencher un message d'alarme ou d'alerte en situation dite de panique.

La société NOKIA a proposé une première solution, proposée sur son site "How to use your phone as a panic button" à l'adresse suivante : http://www.developer.nokia.com/Community/Wiki/How_to_use_your_ phone_as_a_panic_button

Cette solution consiste à proposer en cas d'alerte donnée de composer un numéro de téléphone d'envoyer un SMS (message court) aux contacts enregistrés

On a également proposé dans la demande de brevet américain US 2008/0030350 un téléphone cellulaire muni d'un bouton panique spécifique, permettant l'activation d'un message radiodiffusé et/ou sonore.

Une autre demande de brevet américain US 2002/0183037 propose une autre solution de bouton dédié d'activation d'un message d'alarme pour dissuader les agresseurs.

Une autre demande de brevet américain US 2005/0221866 propose une méthode de notification d'urgence faisant intervenir un bouton dédié sur le téléphone, générant l'activation d'une alarme sonore et, selon les paramétrages effectués, la transmission de messages de détresse. Selon les paramétrages, les messages de détresse peuvent être au format texte, image, vidéo ou audio.

Le brevet US 2006/0217105 décrit un dispositif sans fil qui permet à l'utilisateur en situation d'urgence de transmettre en un seul et même MMS sa localisation GPS, son profil ainsi que des données audio et vidéo capturées automatiquement par une action unique de sa part sur un bouton dédié à l'alerte ou sur un bouton préexistant dudit dispositif, lequel pouvant être un téléphone cellulaire. Selon ce brevet, le dispositif sans fil doit être activé pour déclencher l'émission du MMS.

Le brevet européen EP1629449 décrit un dispositif de communication portable destiné à être porté par une personne et utilisé conjointement avec un téléphone portable à capacité Bluetooth. Il sert à communiquer un signal indiquant l'existence d'une urgence à une station de base et comprend un boîtier en forme de pendentif à l'intérieur duquel est disposé un premier circuit d'interface qui comprend une paire de commutateurs d'activation enclenchés par des boutons d'alarme afin de faciliter l'entrée d'un signal dans le dispositif indiquant l'existence d'une urgence. Un microprocesseur lit les signaux dans le premier circuit d'interface et lit la dernière position déterminée du dispositif en utilisant un circuit de positionnement GPS dans le boîtier. Il lit aussi l'identité du dispositif, le numéro de téléphone de la station de base à laquelle doit être communiqué le message relatif à l'existence d'une situation d'urgence à partir d'une mémoire programmable. Le microprocesseur prépare un signal d'activation qui comprend l'identité et la position du dispositif, le numéro de téléphone de la station de base et le message qui est transmis avec une étiquette de temps via un émetteur / récepteur Bluetooth au téléphone portable. Le signal d'activation active le téléphone portable de manière à transférer les données contenues dans le signal d'activation à la station de base.

D'autres solutions de l'art antérieur proposent des applications installées sur le téléphone que l'utilisateur doit ouvrir pour déclencher l'alerte.

### Inconvénients des solutions de l'art antérieur

Les solutions de l'art antérieur ne sont pas totalement satisfaisantes.

Celles basées sur l'adjonction d'un bouton d'alarme ou d'alerte dédié sont limitées à des téléphones conçus dès le départ pour implémenter cette fonctionnalité, et ne permettent pas de faire évoluer un parc de téléphones existants, ni à un utilisateur de faire évoluer son téléphone pour intégrer cette fonctionnalité.

Pour les solutions de l'art antérieur prévoyant le déclenchement d'une alarme ou d'une alerte à partir d'une application installée sur le téléphone, l'inconvénient est que l'activation d'une alarme ou d'une alerte nécessite plusieurs interventions de l'utilisateur. Il faut pour donner l'alerte :
2) Déverrouiller l'écran s'il est verrouillé ou, si l'utilisateur est sur une autre application, cliquer sur le bouton « Home » pour ramener l'écran d'accueil du téléphone ;
2) Trouver et Cliquer sur l'icône de l'application sur l'écran d'accueil du téléphone pour ouvrir l'application ;
3) Sur l'écran d'accueil de l'application, cliquer sur « call » ou sur une icône d'alerte et confirmer l'envoi du SMS.

Cette succession d'opérations n'est pas adaptée à la mise en œuvre dans des situations de panique, par exemple d'agression, d'accident ou de malaise.

Les autres applications d'urgence ne fonctionnent que dans certaines circonstances, par exemple lorsque le téléphone est verrouillé, ou déverrouillé, ou en mode d'attente.

### Solution apportée par l'invention.

L'objet de la présente invention est de remédier à ces inconvénients en proposant une solution permettant l'activation de l'alerte par une intervention unique et adaptée à une situation de panique, apte à être installée sur un téléphone cellulaire quelconque, sans modification matérielle, et évitant les activations inopinées.

L'invention concerne un téléphone cellulaire selon la revendication 1 et un programme informatique selon la revendication 6. Des modes particuliers de réalisation sont définis dans les revendications dépendantes.

A cet effet, l'invention concerne selon son acception la plus générale un téléphone cellulaire comprenant des moyens pour la génération et l'émission d'un message d'alarme ou d'alerte à destination d'au moins un destinataire prédéfini, en réponse à une action pour la génération automatique d'un message d'alerte vocal ou numérique et/ou sous forme de SMS et/ou de message électronique par un téléphone cellulaire, le cas échéant avec localisation GPS, à un ou plusieurs destinataires prédéterminés, lesdits moyens étant activés par une action unique par l'utilisateur. Ce téléphone cellulaire comporte un programme informatique pour détecter en tâche de fond un changement d'état d'au moins un moyen d'interface homme machine du téléphone correspondant à ladite action unique d'activation, ledit changement d'état étant spécifique à une situation de panique associée à des paramètres préenregistrés, et en cas de détection dudit changement d'état, l'envoi d'un message d'interruption du processeur et d'appel d'une routine déclenchant une application commandant l'émission d'un message contenant des paramètres préenregistrés.

De préférence, ledit changement d'état correspond à une action sur au moins une touche principale du téléphone.

Selon une première variante, ledit changement d'état correspond à une action répétée sur une touche principale du téléphone, le nombre de répétition étant supérieur ou égal à 3.

Selon une deuxième variante, ledit changement d'état correspond à une action prolongée sur une touche principale du téléphone, la durée de l'action prolongée étant supérieure ou égale à trois secondes.

Selon une troisième variante, ledit changement d'état correspond à une action détectée par le capteur gyroscopique du téléphone correspondant à une agitation pendant une durée et une amplitude supérieure à des valeurs seuils prédéterminées.

Selon une quatrième variante, ledit changement d'état correspond à une reconnaissance vocale d'une onomatopée ou d'une séquence de mots prédéfinie.

L'invention concerne également un programme informatique apte à être enregistré dans la mémoire d'un téléphone cellulaire. Ledit programme est configuré pour détecter en tâche de fond un changement d'état d'au moins un moyen d'interface homme machine du téléphone correspondant à ladite action unique d'activation, ledit changement d'état étant spécifique à une situation de panique associée à des paramètres préenregistrés, et en cas de détection dudit changement d'état, l'envoi d'un message d'interruption du processeur et d'appel d'une routine déclenchant une application commandant l'émission d'un message contenant des paramètres préenregistrés.

Avantageusement, ledit changement d'état correspond à une action sur au moins une touche principale du téléphone.

Selon une première variante, ledit changement d'état correspond à une action répétée sur une touche principale du téléphone, le nombre de répétition étant supérieur ou égal à trois.

Selon une deuxième variante, ledit changement d'état correspond à une action prolongée sur une touche **principale** du téléphone, la durée de l'action étant supérieure ou égale à trois secondes.

Selon une troisième variante, ledit changement d'état correspond à une action détectée par le capteur gyroscopique du téléphone correspondant à une agitation pendant une durée et une amplitude supérieure à des valeurs seuils prédéterminées.

Selon une quatrième variante, ledit changement d'état correspond à une reconnaissance vocale d'une phrase ou d'une onomatopée prédéfinie

L'effet technique de cette invention est de permettre de donner l'alerte à partir d'un téléphone cellulaire standard sans bouton dédié à l'alerte et sans avoir (i) à afficher l'écran d'accueil du téléphone cellulaire pour cliquer sur une icône (icône de l'application ou en extrapolant les solutions de l'art antérieur icône de « bouton panique ») (ii) ni à ré-ouvrir l'application mais (iii) à tout moment et dans toutes circonstances donc :
- même si l'écran est verrouillé,
- même si l'utilisateur est sur une autre application,
- même si l'application est fermée,
- que le téléphone soit en veille ou activé, que le téléphone soit verrouillé ou déverrouillé, que le téléphone soit utilisé ou non.

La solution selon l'invention utilise pour déclencher l'alerte non pas une série d'actions de la part de l'utilisateur (souvent impossibles en situation de danger) mais une action unique de sa part.

La solution selon l'invention consiste en un programme informatique exécuté sur un téléphone cellulaire qui comporte un code exécuté en tache de fond pour détecter l'action de l'utilisateur même si le téléphone est verrouillé ou en veille ou utilisé et sans besoin d'ouvrir l'application ou de la mettre au premier-plan. La détection de l'action de l'utilisateur est traitée par un code spécial comme une condition d'interruption du processeur pour appeler automatiquement et immédiatement l'émission des messages d'urgence sans intervention additionnelle de l'utilisateur.

La solution selon l'invention présente l'intérêt que l'application d'alerte est active en tout temps, même si le téléphone est en mode veille ou verrouillé ou utilisé et sans besoin d'être ouverte ni constamment en avant-plan.

La solution selon l'invention présente également l'intérêt de pouvoir déclencher une alerte par une action unique de l'utilisateur sans nécessiter un processus de déverrouillage si le téléphone est en mode veille et/ou verrouillé, ni l'ouverture de l'application ou sa mise au premier-plan si le téléphone est utilisé, ni une intervention additionnelle pour l'émission des messages d'urgence.

La solution selon l'invention simplifie l'intervention de l'utilisateur et accélère le lancement de l'application en situation d'urgence, tout en préservant la consommation d'énergie et en priorisant le traitement du protocole d'alerte.

L'action unique de l'utilisateur correspond à un geste ou une répétition de gestes que l'utilisateur peut faire de manière instinctive, sans besoin de visualiser l'écran. De préférence, cette action unique consiste à agir une ou plusieurs fois sur un bouton principal préexistant du téléphone. Éventuellement cette action unique peut être aussi une action détectée par le capteur gyroscopique ou par reconnaissance vocale.

La solution selon l'invention permet de s'affranchir d'un téléphone spécifique conçu avec un bouton dédié à l'urgence et de pouvoir déclencher l'alerte à partir d'un téléphone cellulaire standard sans modification matérielle.

Un bouton principal préexistant du téléphone est par exemple le bouton d'accueil « home » ou le bouton d'allumage « on/off ».

La triple action du bouton principal dit « home » sur un téléphone cellulaire tel que l'Iphone (marque déposée) pour l'accessibilité constitue un exemple de mise en œuvre de l'invention. Cette triple action fonctionne en toutes circonstances et notamment même si le téléphone est en veille ou si l'écran est verrouillé ou si l'utilisateur est sur une autre application. Il fonctionnerait même si l'application selon l'invention était fermée car son déclenchement engendrerait de façon indépendante de l'ouverture ou non de l'application, un appel automatique et éventuellement un envoi automatique de SMS et/ou email avec localisation GPS.

Un autre exemple de mise en œuvre de l'invention consiste à activer l'alerte par plusieurs appuis sur le bouton d'allumage on/off. Le bouton d'allumage fonctionne en toutes circonstances et notamment même si le téléphone est en veille ou l'écran verrouillé ou si l'utilisateur est sur une autre application. L'appui sur le bouton d'allumage se traduit habituellement par une extinction ou un allumage de l'écran. Le premier appui de l'utilisateur garde sa fonction première à savoir d'activer le téléphone et d'afficher l'écran de déverrouillage si le téléphone était en veille ou de mettre le téléphone en veille si le téléphone était activé ; le second appui garde sa fonction principale à savoir d'activer le téléphone et d'afficher l'écran de déverrouillage si la première action l'avait éteint ou de l'éteindre si la première action l'avait activé. La succession de ces deux premiers appuis avec les suivants est détectée par le programme selon l'invention qui va commander l'émission sans besoin que le téléphone soit déverrouillé ou que l'application soit au premier plan.

D'autres solutions sont possibles : quadruple action sur un bouton principal, action prolongée, action sur une combinaison de boutons, agitation du téléphone et analyse des signaux fournies par le capteur gyroscopique intégré dans le téléphone et/ou par les moyens de reconnaissance vocale.

Les messages d'alerte comportent préférablement un appel d'urgence déclenché de manière automatique, sans intervention additionnelle de l'utilisateur.

Dans les applications de l'art antérieur, il faut que l'utilisateur compose le numéro et/ou confirme l'appel pour qu'il soit lancé ce qui constitue une étape supplémentaire dans le déclenchement de l'alerte souvent impossible en situation d'urgence.

Dans les applications concurrentes, l'utilisateur devra parler pendant cet appel ce qui n'est souvent pas possible en situation d'urgence. Selon l'invention, l'appel inclura un message préenregistré et l'utilisateur n'aura pas besoin de parler. Le but de l'appel n'est pas de converser mais de prévenir la personne à contacter du déclenchement de l'alerte. Enfin, l'appel pourra être numérique pour pallier au manque de réseau.

Quant à l'envoi de SMS d'alerte, il sera lui aussi automatique alors que dans les applications de l'art antérieur le téléphone doit être activé et/ou l'utilisateur doit confirmer l'envoi du SMS. A nouveau, une étape de déclenchement de l'alerte est supprimée avec l'invention et en cas d'urgence il est fort probable que l'utilisateur n'ait pas le temps ou la condition physique d'effectuer toutes les étapes prévues par les applications concurrentes.

Le message vocal ou digital peut comprendre des informations pour l'identification de l'abonné du téléphone cellulaire (par exemple son nom, son identifiant numérique d'abonné ou de son téléphone, ou de sa carte SIM), ainsi que sa localisation (coordonnées GPS et/ou désignation de la cellule dans laquelle le message a été émis) qui figurent dans les paramètres préenregistrés.

L'invention n'est pas limitée à un type de message donné, ni à un mode d'activation particulier. Il est possible d'activer la procédure d'alerte par double ou multi cliquage d'un ou plusieurs boutons, par exemple par une combinaison simple de séquences courtes et prolongées. Le bouton sollicité est avantageusement un bouton principal, tel la touche « on/off » ou la touche « home », ou éventuellement un autre bouton mais, dans tous les cas, un bouton préexistant du téléphone, sans modification matérielle par adjonction d'un bouton dédié.

Par ailleurs, le message peut être émis de manière périodique, par exemple toutes les 5 minutes ou selon une autre fréquence réglable. Il est alors possible pour l'utilisateur d'interrompre la procédure d'alerte, par exemple par la saisie d'un code personnel.

## Revendications

1. Téléphone cellulaire comprenant des moyens pour la génération et l'émission d'un message d'alerte à destination d'au moins un destinataire prédéfini, en réponse à une action pour la génération automatique d'un message d'alerte par le téléphone cellulaire à un ou plusieurs destinataires prédéterminés, **caractérisé en ce que** lesdits moyens sont activés par une action unique par l'utilisateur à tout moment et dans toutes circonstances, même si l'écran est verrouillé ou l'utilisateur est sur une autre application et sans nécessiter l'ouverture d'une application ni aucune intervention additionnelle, et **en ce que** le téléphone comporte un programme informatique apte à être installé sur un téléphone cellulaire quelconque, sans modification matérielle, pour détecter en tâche de fond un changement d'état d'au moins un moyen d'interface homme machine du téléphone correspondant à ladite action unique d'activation, ledit changement d'état étant spécifique à une situation de panique associée à des paramètres préenregistrés, et en cas de détection dudit changement d'état, l'envoi d'un message d'interruption du processeur et d'appel d'une routine déclenchant une application commandant l'émission d'un message d'alerte vocal ou numérique contenant des paramètres préenregistrés.

2. Téléphone cellulaire selon la revendication 1 **caractérisé en ce que** ledit changement d'état correspond à une action répétée sur au moins une touche principale du téléphone, le nombre de répétition étant supérieur ou égal à 3.

3. Téléphone cellulaire selon la revendication 1 **caractérisé en ce que** ledit changement d'état correspond à une action prolongée sur au moins une touche principale du téléphone, la durée de ladite action étant supérieure ou égale à trois secondes.

4. Téléphone cellulaire selon la revendication 1 **caractérisé en ce que** ledit changement d'état correspond à une action détectée par le capteur gyroscopique du téléphone correspondant à une agitation pendant une durée et une amplitude supérieure à des valeurs seuils prédéterminées.

5. Téléphone cellulaire selon la revendication 1 **caractérisé en ce que** ledit changement d'état correspond à la reconnaissance vocale d'une onomatopée ou d'une séquence de mots prédéfinie.

6. Programme informatique apte à être enregistré dans la mémoire d'un téléphone cellulaire quelconque, sans modification matérielle, **caractérisé en ce que** ledit programme est configuré, à tout moment et dans toutes circonstances, même si l'écran est verrouillé ou l'utilisateur est sur une autre application et sans nécessiter l'ouverture d'une application ni aucune intervention additionnelle, pour détecter en tâche de fond un changement d'état d'au moins un moyen d'interface homme machine du téléphone correspondant à une action unique d'activation par l'utilisateur, ledit changement d'état étant spécifique à une situation de panique associée à des paramètres préenregistrés, et en cas de détection dudit changement d'état, l'envoi d'un message d'interruption du processeur et d'appel d'une routine déclenchant une application commandant l'émission d'un message d'alerte vocal ou numérique contenant des paramètres préenregistrés.

7. Programme informatique selon la revendication 6 **caractérisé en ce que** ledit changement d'état correspond à une action répétée sur au moins une touche principale du téléphone, le nombre de répétition étant supérieur ou égal à trois.

8. Programme informatique selon la revendication 6 **caractérisé en ce que** ledit changement d'état correspond à une action prolongée sur au moins une touche principale du téléphone, la durée de ladite action étant supérieure ou égale à trois secondes.

9. Programme informatique selon la revendication 6 **caractérisé en ce que** ledit changement d'état correspond à une action détectée par le capteur gyroscopique du téléphone correspondant à une agitation pendant une durée et une amplitude supérieure à des valeurs seuils prédéterminées.

10. Programme informatique selon la revendication 6 **caractérisé en ce que** ledit changement d'état correspond à la reconnaissance vocale d'une onomatopée ou d'une séquence de mots prédéfinie.

## Patentansprüche

1. Mobiltelefon mit Mitteln zur Erzeugung und Übertragung einer Warnmeldung an mindestens einen vordefinierten Empfänger als Reaktion auf eine Aktion zur automatischen Erzeugung einer Warnmeldung durch das Mobiltelefon an einen oder mehrere vorher festgelegte Empfänger, **dadurch gekennzeichnet, dass** durch eine einzige Aktion des Benutzers jederzeit und unter allen Umständen diese Mittel aktiviert werden, auch wenn der Bildschirm gesperrt ist oder sich der Benutzer in einer anderen Anwendung befindet und ohne dass eine Anwendung geöffnet oder ein weiterer Eingriff erforderlich ist, und dass das Telefon über ein Computerprogramm verfügt, das ohne Hardwaremodifikation auf jedem Mobiltelefon installiert werden kann, um im Hintergrund eine Zustandsänderung mindestens einer Mensch-Maschine-Schnittstelleneinrichtung des Telefons entsprechend der einzelnen Aktivierungsaktion zu erkennen, wobei die Zustandsänderung spezifisch ist für eine Notsituation in Verbindung mit voraufgezeichneten Parametern, und im Falle der Feststellung der Zustandsänderung das Senden einer Prozessorunterbrechungsnachricht und der Aufruf eines Routineablaufs, der eine Anwendung auslöst, die die Übertragung einer Sprach- oder Digitalalarmnachricht mit voraufgezeichneten Parametern anweist.

2. Mobiltelefon nach Anspruch 1 **dadurch gekennzeichnet, dass** die Zustandsänderung einer wiederholten Aktion auf mindestens einer Haupttaste des Telefons entspricht, wobei die Anzahl der Wiederholungen größer oder gleich 3 ist.

3. Mobiltelefon nach Anspruch 1 **dadurch gekennzeichnet, dass** die Zustandsänderung einer verlängerten Aktion auf mindestens einer Haupttaste des Telefons entspricht, wobei die Aktionsdauer größer oder gleich drei Sekunden ist.

4. Mobiltelefon nach Anspruch 1 **dadurch gekennzeichnet, dass** die Zustandsänderung einer durch den Kreiselsensor des Telefons erfassten Aktion entspricht, die einer Bewegung für eine Dauer und eine Amplitude entspricht, die größer als vorbestimmte Schwellenwerte sind.

5. Mobiltelefon nach Anspruch 1 **dadurch gekennzeichnet, dass** die Zustandsänderung der Spracherkennung einer Lautmalerei oder einer vordefinierten Wortfolge entspricht.

6. Computerprogramm, das ohne Hardwaremodifikation im Speicher eines beliebigen Mobiltelefons gespeichert werden kann, **dadurch gekennzeichnet, dass** das Programm jederzeit und unter allen Umständen konfiguriert ist, selbst wenn der Bildschirm gesperrt ist oder sich der Benutzer in einer anderen Anwendung befindet und ohne dass ein zusätzlicher Eingriff erforderlich ist, um im Hintergrund eine Zustandsänderung von mindestens einem Mensch-Maschine-Schnittstellenmittel des Telefons zu erkennen, die einer einzigen Aktivierungsaktion durch den Benutzer entspricht, wobei die Zustandsänderung spezifisch ist für eine Notsituation im Zusammenhang mit vorab aufgezeichneten Parametern, und im Falle der Feststellung der Zustandsänderung, das Senden einer Nachricht zum Unterbrechen des Prozessors und Aufrufen eines Routinevorgangs, der eine Anwendung auslöst, die die Übertragung einer Sprach- oder digitalen Warnnachricht mit vorab aufgezeichneten Parametern anweist.

7. Computerprogramm nach Anspruch 6 **dadurch gekennzeichnet, dass** die Zustandsänderung einer wiederholten Aktion auf mindestens einer Haupttaste des Telefons entspricht, wobei die Anzahl der Wiederholungen größer oder gleich drei ist.

8. Computerprogramm nach Anspruch 6 **dadurch gekennzeichnet, dass** die Zustandsänderung einer verlängerten Aktion auf mindestens einer Haupttaste des Telefons entspricht, wobei die Dauer der Aktion größer oder gleich drei Sekunden ist.

9. Computerprogramm nach Anspruch 6 **dadurch gekennzeichnet, dass** die Zustandsänderung einer von dem Kreiselsensor des Telefons erfassten Aktion entspricht, die einer Bewegung für eine Dauer und eine Amplitude entspricht, die größer als vorbestimmte Schwellenwerte sind.

10. Computerprogramm nach Anspruch 6, **dadurch gekennzeichnet, dass** die Zustandsänderung der Spracherkennung einer Lautmalerei oder einer vordefinierten Wortfolge entspricht.

## Claims

1. A cellular telephone comprising means for the generation and transmission of an alert message to at least one predefined recipient, in response to an action for the automatic generation of an alert message by the cellular telephone to one or more predetermined recipients, **characterized in that** the said means are activated by a unique action by the user at any time and in all circumstances, even if the screen is locked or the user is on another application and without requiring the opening of an application or any additional intervention, and **in that** the telephone comprises a computer program adapted to be installed on any cellular telephone, without hardware modification, for detecting as a background task a change of state of at least one man-machine interface of the telephone corresponding to the said unique activation action, the said change of state being specific to a panic situation associated with pre-recorded parameters, and in case of detection of the said change of state, for sending a processor interrupt message and calling a routine triggering an application commanding the transmission of a voice or digital message containing pre-recorded parameters.

2. A cellular telephone according to Claim 1 wherein the change of state corresponds to a repeated action on at least one main key of the telephone, the number of repetitions being greater than or equal to three.

3. A cellular telephone according to Claim 1 wherein the change of state corresponds to a long action on at least one main key of the telephone, with the duration of the action being longer than or equal to three seconds.

4. A cellular telephone according to Claim 1 wherein the change of state corresponds to an action detected by the gyroscopic sensor of the telephone corresponding to a shaking for a duration and of amplitude above predetermined threshold values.

5. A cellular telephone according to Claim 1 wherein the change of state corresponds to the voice recognition of an onomatopoeia or of a predefined sequence of words.

6. A computer program adapted to be stored in the memory of any cellular telephone, without hardware modification, the said program being configured, at any time and in all circumstances, even if the screen is locked or the user is on another application and without requiring the opening of an application or any additional intervention, to detect as a back ground task a change of state of at least one man-machine interface of the telephone corresponding to a unique activation action by the user, the said change of state being specific to a panic situation associated with pre-recorded parameters, and in case of detection of the said change of state, to send a processor interrupt message and to call a routine triggering an application commanding the transmission of a voice or digital alert message containing pre-recorded parameters.

7. A computer program according to Claim 6 wherein the change of state corresponds to a repeated action on at least one main key of the telephone, the number of repetitions being greater than or equal to three.

8. A computer program according to Claim 6 wherein the change of state corresponds to a long action on at least one main key of the telephone, with the duration of the action being longer than or equal to three seconds.

9. A computer program according to Claim 6, wherein the change of state corresponds to an action detected by the gyroscopic sensor of the telephone corresponding to a shaking for a duration and of amplitude above predetermined threshold values.

10. A computer program according to Claim 6, wherein the change of state corresponds to the voice recognition of an onomatopoeia or of a predefined sequence of words.
